Europäisches Patentamt

European Patent Office

Office européen des brevets

(11) Veröffentlichungsnummer: **0 480 284 A2**

# EUROPÄISCHE PATENTANMELDUNG

(21) Anmeldenummer: **91116676.7**

(51) Int. Cl.5: **B08B 3/02**

(22) Anmeldetag: **30.09.91**

(30) Priorität: **09.10.90 DE 4031993**

(43) Veröffentlichungstag der Anmeldung:
**15.04.92 Patentblatt 92/16**

(84) Benannte Vertragsstaaten:
**CH DE DK ES FR GB IT LI SE**

(71) Anmelder: **CHIRON-WERKE GMBH & CO. KG**
**Talstrasse 23**
**W-7200 Tuttlingen(DE)**

(72) Erfinder: **Vogel, Matthias, Dipl.-Ing.**
**Angelwasenstrasse 15/1**
**W-7230 Schramberg-Waldmössingen(DE)**
Erfinder: **Grund, Peter, Dr.-Ing.**
**Bergblickstrasse 13**
**W-8959 Rieden a.F.(DE)**

(74) Vertreter: **Witte, Alexander, Dr.-Ing. et al**
**Augustenstrasse 7**
**W-7000 Stuttgart 1(DE)**

(54) **Werkzeugmaschine.**

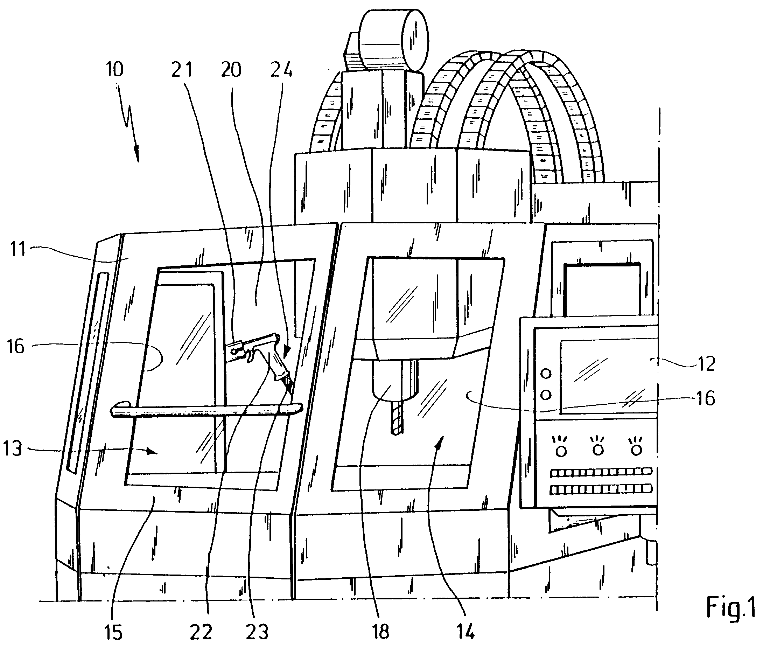

(57) Eine Werkzeugmaschine (10) mit einem Arbeitsbereich (14) zum Bearbeiten von Werkstücken mittels zumindest eines Werkzeuges weist ein über einen Schlauch (23) mit Reinigungsmedium versorgtes Abgabegerät (24) zum Ausstoßen eines zum Reinigen dienenden Medienstromes auf. Ferner ist an der Werkzeugmaschine (10) ein Halter (21) für das Abgabegerät (24) vorgesehen. In einem ersten Ausführungsbeispiel ist das Abgabegerät (24) in den Halter (21) einsteckbar (Fig. 1). In einem weiteren Ausführungsbeispiel hält der Halter das Abgabegerät mittels Magnetkraft.

Fig.1

Die Erfindung betrifft eine Werkzeugmaschine mit einem Arbeitsbereich zum Bearbeiten von Werkstücken mittels zumindest eines Werkzeuges, mit einem über einen Schlauch mit Reinigungsmedium versorgten Abgabegerät zum Ausstoßen eines zum Reinigen dienenden Medienstromes und mit einem an der Werkzeugmaschine vorgesehenen Halter für das Abgabegerät.

Eine Werkzeugmaschine der vorstehend genannten Art ist als Erzeugnis der Anmelderin bekannt.

Bei der bekannten Werkzeugmaschine ist das Abgabegerät eine Spülpistole, die über einen Schlauch mit Druckluft, Wasser oder einem sonstigen Reinigungsmittel versorgt wird, und dazu dient, nach dem Ende eines Arbeitsganges den Arbeitsbereich, das bearbeitete Werkstück und ggf. das Werkzeug von Spänen und Bohrwasser zu reinigen. Zu diesem Zweck stößt die Spülpistole nach Maßgabe einer Bedienungsperson beispielsweise einen Luft- oder Wasserstrahl aus, den die Bedienungsperson auf die zu reinigenden Flächen richtet.

Die Werkzeugmaschine weist ein Gehäuse auf, das den Arbeitsbereich während der Bearbeitung eines Werkstückes vollständig nach außen abschließt. An einer Innenwand des Gehäuses ist ein Haken vorgesehen, an den die Spülpistole gehängt wird, wenn die Werkzeugmaschine ein Werkstück bearbeitet. Die Spülpistole weist zu diesem Zweck einen Ring oder eine Öse auf, in den bzw. in die der Haken eingreift.

Um das in die Werkzeugmaschine eingespannte Werkstück während der Bearbeitung oder am Ende der Bearbeitung zu reinigen, öffnet die Bedienungsperson eine in dem Gehäuse vorgesehene Tür, nimmt die Spülpistole von dem Haken und richtet den Reinigungsstrahl auf das Werkstück, den Arbeitsbereich und ggf. das Werkzeug. Nach beendeter Reinigung hängt er die Spülpistole wieder an den Haken, wechselt ggf. das Werkstück und schließt dann die Tür.

Insbesondere bei schnellem Arbeiten geschieht es immer wieder, daß die Bedienungsperson mehrere Versuche benötigt, bis sie mit dem Ring oder der Öse den Haken getroffen hat. In diesem Zusammenhang kann es vorkommen, daß der Haken nicht richtig in die Öse oder den Ring eingegriffen hat, so daß die Spülpistole infolge der bei erneutem Bearbeitungsablauf der Werkzeugmaschine auftretenden Erschütterungen herunterfällt. Dies ist zum einen aus Sicherheitsgründen unerwünscht, denn die Spülpistole kann in den Arbeitsbereich der Werkzeugmaschine fallen, und zum anderen aus Handhabungsgründen, denn die Bedienungsperson muß die Spülpistole danach evtl. zunächst von Spänen und dgl. reinigen.

All dies ist von Nachteil, weil sich dadurch die Werkstückwechselzeit deutlich erhöht und andererseits der gesamte Arbeitsablauf beeinflußt wird, da ein wiederholtes "Nicht-Treffen" des Hakens oder "Reinigen-Müssens" der Spülpistole bei der Bedienungsperson zu Unruhe führt.

Der Erfindung liegt daher die Aufgabe zugrunde, eine Werkzeugmaschine der eingangs genannten Art dahingehend weiterzubilden, daß die vorstehend genannten Nachteile vermieden werden. Insbesondere soll es möglich werden, das Abgabegerät in einem einfachen Bewegungsablauf in eine Stellung zu bringen, in der es von dem Halter sicher gehalten wird. Der Halter soll dabei konstruktiv einfach aufgebaut sein.

Diese Aufgabe wird erfindungsgemäß dadurch gelöst, daß das Abgabegerät in den Halter einsteckbar ist.

Diese Aufgabe wird ferner dadurch gelöst, daß der Halter das Abgabegerät mittels Magnetkraft hält.

Die der Erfindung zugrundeliegende Aufgabe wird auf diese beiden Weisen vollkommen gelöst.

Bei der neuen Werkzeugmaschine ist das Abgabegerät in einem einfachen, zielgerichteten Bewegungsablauf schnell und sicher in den Halter einzustecken oder so in die Nähe des Halters zu bringen, daß es mit Hilfe der Magnetkraft angezogen und gehalten wird. In beiden Fällen ist kein umständliches und ggf. zeitraubendes "Auf-den-Haken-Hängen" mehr erforderlich. Wenn die Bedienungsperson das Abgabegerät in den Halter eingesteckt bzw. mittels Magnetkraft an den Halter angehängt hat, wird es dort sicher gehalten. Ein unsicheres Halten, mit dem - wie beim Stand der Technik - ein durch die Erschütterungen bedingtes Herunterfallen des Abgabegerätes verbunden ist, ist bei der neuen Werkzeugmaschine nicht möglich. Sowohl der Halter zum Einstecken als auch der Halter mit Magnetkraft können so ausgebildet sein, daß das Abgabegerät von vorne oder von unten oder von der Seite auf den Halter zu bewegt wird. Bei von unten einzusteckendem Abgabegerät kann der Halter z.B. eine nach unten offene Klammer aufweisen, die den Halter längs eines rohrförmigen Abschnittes ergreift.

Bei einem bevorzugten Ausführungsbeispiel der Werkzeugmaschine mit dem Halter zum Einstecken des Abgabegerätes weist der Halter eine Aufnahmeöffnung für das Abgabegerät auf, in der das Abgabegerät federnd gehalten ist.

Diese Maßnahme ist besonders vorteilhaft, weil das Abgabegerät nicht nur in eine Aufnahmeöffnung eingesteckt wird, sondern dort zusätzlich auch noch durch Federkraft gehalten wird. Das Einstecken in die Öffnung ist ein einfacher zielgerichteter Bewegungsablauf, durch den das Abgabegerät schnell abgelegt werden kann. Durch das federnde Halten des Abgabegerätes wird außerdem dafür gesorgt, daß das Abgabegerät während eines Bearbeitungsvorganges nicht aus der Aufnahmeöffnung herausfallen kann.

Weiterhin ist es bevorzugt, wenn die Aufnahmeöffnung von einem Aufnahmekanal gebildet ist, der einen äußeren trichterförmigen Abschnitt aufweist.

Durch diese konstruktiv sehr einfach zu erzielende Maßnahme wird die Einsteckbewegung des Abgabegerätes in die Aufnahmeöffnung und somit in den Aufnahmekanal hinein durch den trichterförmigen Abschnitt sozusagen "geführt". Die Bedienungsperson kann nach Benutzung des Abgabegerätes dieses ohne weiter hinzusehen, in den Halter einstecken, der wegen des Trichters nicht einmal zentrisch getroffen zu werden braucht. Das Abgabegerät wird vielmehr durch den äußeren trichterförmigen Abschnitt sozusagen automatisch in den Aufnahmekanal geleitet.

Weiterhin ist es bevorzugt, wenn der Halter eine Hinterschneidung aufweist, die bei eingestecktem Abgabegerät mit einem an diesem vorgesehenen Vorsprung zusammenwirkt, um das Abgabegerät zu halten.

Das Abgabegerät wird dabei in vorteilhafter Weise durch die in Anlage mit dem Vorsprung befindliche Hinterschneidung formschlüssig gehalten und kann nicht aus dem Halter herausfallen. Neben dem einfachen Bewegungsablauf, der kein Verriegeln des Halters o.ä. erfordert, ist diese Maßnahme auch aus Sicherheitsgründen von Vorteil, denn das Abgabegerät kann auch bei starken Erschütterungen nicht aus dem Halter herausfallen.

Weiterhin ist es bevorzugt, wenn der Aufnahmekanal von zumindest einem, vorzugsweise von zwei federnden Wandsegmenten umgeben ist.

Diese Maßnahme ist u.a. aus konstruktiven Gründen von Vorteil, da die Wand des Aufnahmekanals gleichsam die Federkraft zum Halten des Abgabegerätes aufbringt, so daß keine zusätzlichen Federn erforderlich sind.

Es ist ferner bevorzugt, wenn das Abgabegerät eine Spülpistole ist und wenn der Halter die Spülpistole im Bereich ihres Laufes ergreift.

Auch diese Maßnahme trägt in vorteilhafter Weise zu einem einfachen Bewegungsablauf bei, denn die Bedienungsperson, die die Spülpistole zum Reinigen des Arbeitsbereiches an ihrem Handgriff ergriffen hat, kann, ohne den Griff seiner Hand zu wechseln, die Spülpistole mit ihrem Lauf in den Halter einstecken.

Bei diesem Ausführungsbeispiel ist es bevorzugt, wenn sich in Einsteckrichtung der Spülpistole an den Aufnahmekanal ein hinterschnittener Raum anschließt, wobei beim Einstecken der Spülpistole die federnden Wandsegmente durch den am Lauf angeordneten Vorsprung radial nach außen gedrückt werden und der Vorsprung beim weiteren Einschieben in dem hinterschnittenen Raum zu liegen kommt.

Diese Maßnahme vereinigt auf vorteilhafte Weise sämtliche zuvor genannten Vorteile. Die Spülpistole wird in einem einfachen Bewegungsablauf in den Aufnahmekanal hineingesteckt, wobei die Wandsegmente so weit auseinandergedrückt werden, daß die Spülpistole mit ihrem Vorsprung in den hinterschnittenen Raum gelangt. Die Wandsegmente federn dann zurück und ergreifen die Spülpistole im Bereich ihres Laufes, während der Vorsprung in dem hinterschnittenen Raum gehalten wird. Die Spülpistole wird auf diese Weise sicher in dem Halter gehalten und kann durch einfaches Einstecken bzw. Herausziehen abgelegt bzw. entnommen werden. All dies trägt zu einem schnellen Werkstückwechsel bei. Darüberhinaus ist es nicht mehr möglich, daß die Spülpistole während des Bearbeitungsablaufes herunterfällt. Auch aus Sicherheitsgründen sind diese Maßnahmen folglich vorteilhaft.

Weiterhin ist es bevorzugt, wenn der Aufnahmekanal bei an der Werkzeugmaschine befestigtem Halter mit seiner Längsachse unter einem Winkel zur Horizontalen verläuft, der kleiner als 45° ist und vorzugsweise zwischen 10° und 25° liegt.

Der Halter kann jetzt ergonomisch so an der Werkzeugmaschine angeordnet werden, daß je nach zum Werktückwechsel und zum Reinigen erforderlicher Stellung der Bedienungsperson zu der Werkzeugmaschine das Abgabegerät schräg von oben oder von unten in den Halter eingesteckt wird. Auch diese Maßnahme verkürzt in vorteilhafter Weise die Werkstückwechselzeit, denn die Bedienungsperson kann - ohne ihren Standort zu wechseln - das Abgabegerät bzw. die Spülpistole direkt nach Gebrauch wieder in den Halter einstekken.

Hierbei ist es ferner bevorzugt, wenn der Halter aus Kunststoff gefertigt ist.

Durch diese Maßnahme wird in vorteilhafter Weise die Federkraft durch das Material des Halters geliefert, der zugleich als beispielsweise Spritzteil leicht herzustellen ist und ggf. auch nachträglich an bestehende Werkzeugmaschinen angeschraubt werden kann. Das Nachrüsten von bestehenden Werkzeugmaschinen ist jedoch nicht an eine Herstellung des Halters aus Kunststoff gebunden, so können auch aus Blech oder ähnlichem Material gefertigte Halter nachträglich an die Werkzeugmaschine angebaut werden.

Weiterhin ist es bevorzugt, wenn die Werkzeugmaschine ein den Arbeitsbereich zumindest während der Bearbeitung der Werkstücke nach außen abschließendes Gehäuse aufweist, und wenn der Halter an einer Wand im Inneren des Gehäuses angeordnet ist.

Diese an sich bekannte Maßnahme bietet den Vorteil, daß die Bedienungsperson, die sich zum Werkstückwechsel sowieso in das Innere des Gehäuses hineinbeugt, dort zugleich das Abgabegerät vorfindet.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1　　im Ausschnitt eine erfindungsgemäße Werkzeugmaschine mit Gehäuse, wobei in dem Inneren des Gehäuses eine in einen Halter eingesteckte Spülpistole angedeutet ist;

Fig. 2　　die in den Halter eingesteckte Spülpistole aus Fig. 1, in einem anderen Maßstab;

Fig. 3　　eine Darstellung wie Fig. 2, jedoch mit aus dem Halter herausgezogener Spülpistole;

Fig. 4　　eine Draufsicht auf den Halter aus Fig. 3, in einer Ansicht längs des Pfeiles IV aus Fig. 3; und

Fig. 5　　einen weiteren Halter für eine Spülpistole, der die Spülpistole mit Magnetkraft hält.

In Fig. 1 ist im Ausschnitt eine mit 10 bezeichnete Werkzeugmaschine dargestellt, deren Gehäuse 11 und Schaltpult 12 ebenfalls ausschnittsweise gezeigt sind.

Das Gehäuse 11 umschließt in seinem Inneren 13 einen Arbeitsbereich 14 der Werkzeugmaschine 10 so vollständig, daß während der Bearbeitungsvorgänge außerhalb des Innenraumes 13 keine Späne oder Kühlflüssigkeit herumfliegen bzw. -spritzen. Zum Beschicken der Werkzeugmaschine 10 und zum Entnehmen der bearbeiteten Werkstücke ist in dem Gehäuse 11 eine Tür 15 vorgesehen. Das Gehäuse 11 weist weiterhin Fenster 16 auf, durch die eine Bedienungsperson den Bearbeitungsvorgang der Werkzeugmaschine bzw. ihrer bei 18 angedeuteten Werkzeugspindel optisch überwachen kann.

In dem Inneren 13 des Gehäuses 11 ist an einer Wand 20 ein Halter 21 angeordnet, in dem eine Spülpistole 22 steckt. Die Spülpistole 22 wird über einen Schlauch 23 mit einem Reinigungsmedium wie z.B. Luft oder Wasser oder Öl versorgt. Die Spülpistole 22 dient in an sich bekannter Weise als Abgabegerät 24 für einen Strahl oder Strom des Reinigungsmediums, mit dem der Arbeitsbereich 14 und/oder das Werkstück und/oder das Werkzeug gereinigt werden. Zu diesem Zweck wird die Tür 15 geöffnet und eine Bedienungsperson greift in das Innere 13 hinein, ergreift die Spülpistole 22, zieht sie aus dem Halter 21 heraus, richtet den Reinigungsstrahl auf die zu reinigenden Flächen und steckt die Spülpistole 22 danach wieder in den Halter 21 hinein. Jetzt wird entweder das Werkstück gewechselt oder der Bearbeitungsvorgang an dem bereits eingespannten Werkstück begonnen und/oder fortgesetzt.

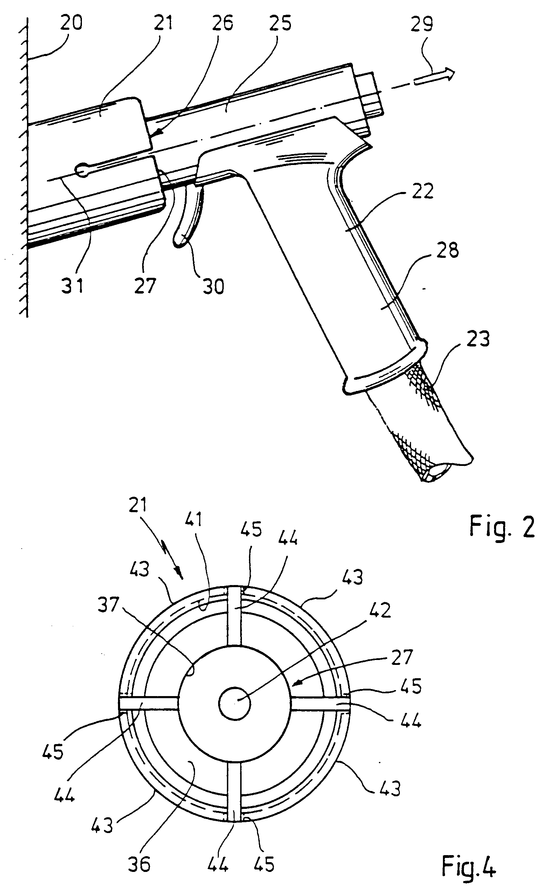

In Fig. 2 sind der Halter 21 und die Spülpistole 22 in einer vergrößerten Seitenansicht dargestellt. Es ist zu erkennen, daß die Spülpistole 22 mit ihrem Lauf 25 durch eine Aufnahmeöffnung 26 hindurch in einen bei 27 lediglich angedeuteten Aufnahmekanal gesteckt ist. Zum Herausziehen der Spülpistole 22 ergreift die Bedienungsperson diese an ihrem Handgriff 28 und zieht sie in Richtung des Pfeiles 29 aus dem Halter 21 heraus. Gleichzeitig kann die Bedienungsperson die Spülpistole 22 auch an ihrem Abzughebel 30 umfassen, so daß er direkt nach dem Ziehen der Spülpistole 22 mit der Reinigung des Arbeitsbereiches 14 und des Werkstückes beginnen kann.

In der in Fig. 2 dargestellten eingesteckten Stellung der Spülpistole 22 ist der Lauf 25 zur Horizontalen geneigt und verläuft mit seiner bei 31 angedeuteten Längsachse, die koaxial zu der Längsachse des Halters 21 ausgerichtet ist, in Fig. 2 schräg nach rechts und oben.

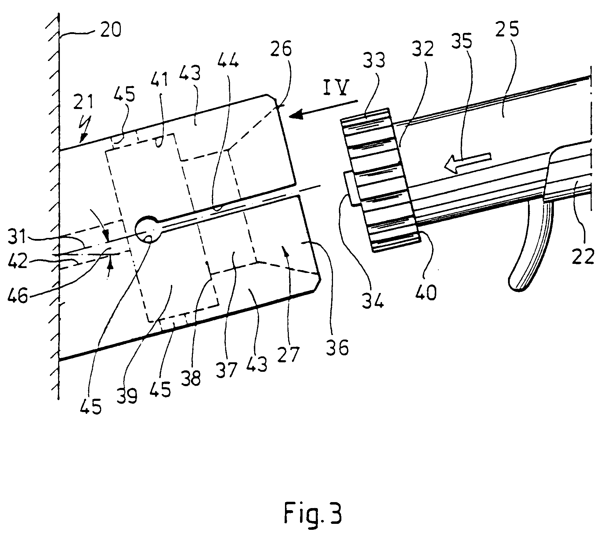

In Fig. 3 ist die Spülpistole 22 kurz vor dem Einstecken in den Halter 21 dargestellt. Der innere Aufbau des Halters 21 ist gestrichelt angedeutet und es ist zu erkennen, daß der Halter 21 nach der Art eines Spannfutters aufgebaut ist.

Die Spülpistole 22 weist mit ihrem vorderen Ende 32 dem Halter 21 zu. Das vordere Ende 22 ist Teil des Laufes 25, der in diesem Bereich einen ringförmigen Vorsprung 33 und zentrisch eine Abgabedüse 34 für den Reinigungsstrahl trägt. Die Spülpistole 22 wird in Richtung des Pfeiles 35 in den Halter 21 eingesteckt.

Der Aufnahmekanal 27 für den Lauf 25 der Spülpistole 22 weist an seinem äußeren Ende einen trichterförmigen Abschnitt 36 auf, durch den die Spülpistole 22 beim Einstecken geführt wird. An den trichterförmigen Abschnitt 36 schließt sich in Einsteckrichtung 35 gesehen unmittelbar ein zylindrischer Abschnitt 37 an, der unter Ausbildung einer Hinterschneidung 38 in einen hinterschnittenen Raum 39 übergeht. In dem in Fig. 2 gezeigten eingesteckten Zustand der Spülpistole 22 befindet sich der ringförmige Vorsprung 33 in dem hinterschnittenen Raum 39 und liegt mit einer ringförmigen Anlagefläche 40 des Vorsprunges 33 mit der Hinterschneidung 38 in Anlage, so daß die Spülpistole gegen Herausfallen gesichert ist. Gegen zu starkes Verkippen ist die Spülpistole 22 jetzt einerseits durch den zylindrischen Abschnitt 37 gesichert, der den Lauf 25 umgreift, und andererseits durch eine zylindrische Innenwand 41 des hinterschnittenen Raumes 39, an der sich der ringförmige Vorsprung 33 abstützt.

Weiterhin ist eine Befestigungsbohrung 42 zu erkennen, in die eine in Fig. 3 aus Übersichtlichkeitsgründen nicht dargestellte Schraube eingeschraubt wird, um den Halter 21 an der Wand 20 zu befestigen.

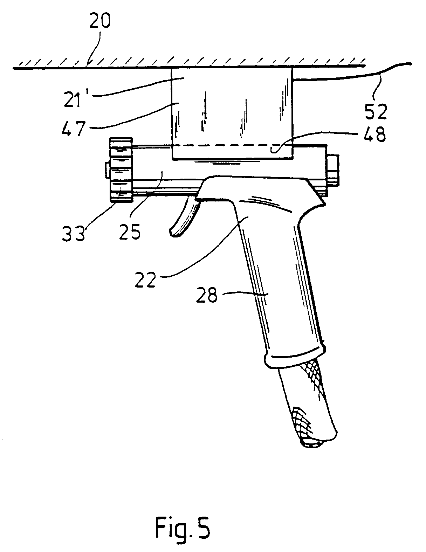

Wie besser in Fig. 4 zu erkennen ist, weist der Halter 21 vier Wandsegmente 43 auf, die den Aufnahmekanal 27 umschließen und voneinander durch Längsschlitze 44 getrennt sind. In Fig. 3 ist zu erkennen, daß die Längsschlitze 44 an ihrem von der Aufnahmeöffnung 26 weg weisenden unteren Ende je eine Bohrung 45 aufweisen, die in den hinterschnittenen Raum 39 hineinführen.

Der Halter 21 ist aus Kunststoff gefertigt, so daß die Wandsegmente 43 federnde Eigenschaft haben. Beim Einstecken der Spülpistole 22 in den Halter 21 drückt der ringförmige Vorsprung 33 den Aufnahmekanal 27 auseinander, so daß er in den hinterschnittenen Raum 39 gelangen kann. Wenn der Vorsprung 33 die Wandsegmente 43 wieder freigegeben hat, federn diese zurück und legen sich mit ihrem zylindrischen Abschnitt 37 an den Lauf 25 an.

Die Spülpistole 22 ist auf diese Weise sicher in dem Halter 21 gehalten. Zum Herausziehen der Spülpistole wird der Handgriff 28 ergriffen und in Richtung des Pfeiles 29 aus Fig. 2 an diesem gezogen. Der Vorsprung 33 gelangt dabei über seine Anlagefläche 40 mit der Hinterschneidung 38 in Anlage und spreizt beim weiteren Ziehen den Aufnahmekanal 27 bzw. die Wandsegmente 43 auseinander, so daß die Spülpistole 22 gegen die Rückstellkraft der federnden Wandsegmente aus dem Halter 21 herausgezogen wird. Die Haltekraft ist jedoch so groß, daß im Bearbeitungsbetrieb der Werkzeugmaschine 10 die Spülpistole 22 auch bei starken Erschütterungen nicht aus dem Halter 21 herausfallen kann.

In Fig. 3 ist bei 46 ein Winkel angedeutet, den die Längsachse 31 des Halters 21 mit der Horizontalen einschließt. Der Winkel 46 beträgt in dem gezeigten Ausführungsbeispiel ca. 15° und liegt oberhalb der Horizontalen, so daß die Spülpistole 22 von schräg oben in den Halter 21 eingesteckt wird. Durch diese schräge Anordnung des Halters 21 an der Wand 20 kann die Bedienungsperson die Spülpistole 22 schräg nach oben aus dem Halter 21 herausziehen bzw. schräg nach unten in diesen hineinstecken, so daß der Halter 21 ergonomisch sinnvoll in dem Inneren 13 des Gehäuses 11 angeordnet werden kann.

In Fig. 5 ist in einem weiteren Ausführungsbeispiel ein Halter 20' gezeigt, der in diesem Falle ein Magnethalter 47 ist. Der Magnethalter 47 weist einen nach unten offenen und im Querschnitt halbkreisförmigen längs durchgehenden Kanal auf, in dem die Spritzpistole 22 mit ihrem Lauf 55 von unten in einer von unten nach oben gehenden geradlinigen Bewegung eingebracht wird.

Der Magnethalter 47 umfaßt entweder einen Permanentmagneten oder einen über eine Zuleitung 52 mit Strom versorgten Elektromagneten. Zum Halten der Spülpistole 22 besteht zumindest ihr Lauf 25 aus einem ebenfalls magnetischen oder zumindest magnetisierbaren und von einem Magneten zu haltenden Material.

Zum Herausnehmen der Spülpistole 22 wird diese an ihrem Handgriff 28 ergriffen und gegen die Kraft des Magneten nach unten aus dem Kanal 48 herausgezogen.

**Patentansprüche**

1. Werkzeugmaschine mit einem Arbeitsbereich (14) zum Bearbeiten von Werkstücken mittels zumindest eines Werkzeuges, mit einem über einen Schlauch (23) mit Reinigungsmedium versorgten Abgabegerät (24) zum Ausstoßen eines zum Reinigen dienenden Medienstromes und mit einem an der Werkzeugmaschine (10) vorgesehenen Halter (21) für das Abgabegerät (24), dadurch gekennzeichnet, daß das Abgabegerät (24) in den Halter (21) einsteckbar ist.

2. Werkzeugmaschine nach Anspruch 1, dadurch gekennzeichnet, daß der Halter (21) eine Aufnahmeöffnung (26) für das Abgabegerät (24) aufweist, in der das Abgabegerät (24) federnd gehalten ist.

3. Werkzeugmaschine nach Anspruch 2, dadurch gekennzeichnet, daß die Aufnahmeöffnung (26) von einem Aufnahmekanal (27) gebildet ist, der einen äußeren trichterförmigen Abschnitt (36) aufweist.

4. Werkzeugmaschine nach Anspruch 1, dadurch gekennzeichnet, daß der Halter (21) eine Hinterschneidung (38) aufweist, die bei eingestecktem Abgabegerät (24) mit einem an diesem vorgesehenen Vorsprung (33) zusammenwirkt, um das Abgabegerät (24) zu halten.

5. Werkzeugmaschine nach Anspruch 3, dadurch gekennzeichnet, daß der Aufnahmekanal (27) von zumindest einem vorzugsweise von zumindest zwei federnden Wandsegmenten (43) umgeben ist.

6. Werkzeugmaschine nach einem der vorhergehenden Ansprüche, dadurch gekennzeichnet, daß das Abgabegerät (24) eine Spülpistole (22) ist und daß der Halter (21) die Spülpistole (22) im Bereich ihres Laufes (25) ergreift.

7. Werkzeugmaschine nach den Ansprüchen 5 und 6, dadurch gekennzeichnet, daß sich in Einsteckrichtung (35) der Spülpistole (22) an den Aufnahmekanal (27) ein hinterschnittener Raum (39) anschließt, wobei beim Einstecken der Spülpistole (22) die federnden Wandsegmente (43) durch den am Lauf (25) angeordneten Vorsprung (33) radial nach außen gedrückt werden und der Vorsprung (33) beim weiteren Einschieben in dem hinterschnittenen Raum (39) zu liegen kommt.

8. Werkzeugmaschine nach einem der Ansprüche 3 bis 7, dadurch gekennzeichnet, daß der Aufnahmekanal (27) bei an der Werkzeugmaschine (10) befestigtem Halter (21) mit seiner Längsachse (31) unter einem Winkel (46) zur Horizontalen verläuft, der kleiner als 45° ist und vorzugsweise zwischen 10° und 25° liegt.

9. Werkzeugmaschine nach einem der vorhergehenden Ansprüche, dadurch gekennzeichnet, daß der Halter (21) aus Kunststoff gefertigt ist.

10. Werkzeugmaschine mit einem Arbeitsbereich (14) zum Bearbeiten von Werkstücken mittels zumindest eines Werkzeuges, mit einem über einen Schlauch (23) mit Reinigungsmedium versorgten Abgabegerät (24) zum Ausstoßen eines zum Reinigen dienenden Medienstromes und mit einem an der Werkzeugmaschine (10) vorgesehenen Halter (21) für das Abgabegerät (24), dadurch gekennzeichnet, daß der Halter (21) das Abgabegerät (24) mittels Magnetkraft hält.

11. Werkzeugmaschine nach Anspruch 10, dadurch gekennzeichnet, daß das Abgabegerät (24) eine Spülpistole (22) ist, und daß der Halter (21) die Spülpistole (22) im Bereich ihres Laufes (25) ergreift.

12. Werkzeugmaschine nach einem der vorhergehenden Ansprüche, dadurch gekennzeichnet, daß sie ein den Arbeitsbereich (14) zumindest während der Bearbeitung der Werkstücke nach außen abschließendes Gehäuse (11) aufweist und daß der Halter (21) an einer Wand (20) im Inneren (13) des Gehäuses (11) angeordnet ist.

Fig.1

EP 0 480 284 A2

EP 0 480 284 A2

Fig. 2

Fig. 4

Fig. 3

Fig. 5